# DEMANDE DE BREVET EUROPEEN

(11) **EP 1 708 201 A1**
(43) Date de publication de la demande: **04.10.2006**
(21) Numéro de dépôt: 05300241.6
(22) Date de dépôt: 01.04.2005
(51) Int. Cl.: G11B 33/04

(54) **Dispositif de groupage de plusieurs boitiers de compact disque**

(71) Demandeur: MOULAGES DU VELAY S.A., 45300 Ascoux (FR)
(72) Inventeur: Mathieu, Bruno, 43000 Aiguille (FR)
(74) Mandataire: Thivillier, Patrick

(57) **Abrégé**

Ce dispositif de groupage de plusieurs boîtiers de compact disque est remarquable en ce qu'il comprend des moyens (4) ou (5) aptes assurer l'accouplement des boîtiers à partir de l'un de leur bord et à permettre leur articulation les uns par rapport aux autres en ayant la possibilité de les ouvrir pour accéder au disque, lesdits moyens étant constitués par une plaque (4) présentant plusieurs bandes articulées (4a, 4b, 4c) correspondant chacune sensiblement à l'épaisseur d'un boîtier et apte à être fixée sur un côté résultant de la juxtaposition des boîtiers.

## Description

L'invention se rattache au secteur technique des boîtiers pour compact disque du type audio ou vidéo ou autre support d'information.

D'une manière parfaitement connue pour un homme du métier, les boîtiers, généralement réalisés en matière plastique, comprennent deux volets articulés à partir d'un dos commun. L'un des volets, et parfois les deux, présente des moyens aptes à assurer le maintien et le positionnement du disque. Ces moyens peuvent, par exemple, coopérer avec l'ouverture centrale que présente le disque et/ou avec une partie de sa périphérie. De nombreuses solutions techniques ont été proposées pour le maintien et le positionnement du disque à l'intérieur du boîtier. Généralement, le boîtier est recouvert d'une jaquette publicitaire en combinaison avec un film de protection en matière plastique.

Il s'avère parfois intéressant de regrouper par deux, trois ou plus, ce type de boîtiers, par exemple lorsqu'il y a une suite logique entre les différents disques.

Les moyens pour réaliser ces différentes fonctions sont limités.

La solution généralement employée, consiste à utiliser un étui, à l'intérieur duquel est disposé en juxtaposition le nombre de boîtiers requis : deux, trois ou plus. Cette solution est simple, mais ne peut pas être considérée comme totalement satisfaisante, étant donné que les différents boîtiers sont totalement indépendants les uns des autres avec, par conséquent, des risques de perte et de mélange lorsqu'on les remet dans l'étui en ne respectant pas, par exemple, l'ordre chronologique.

L'invention s'est fixée pour but de remédier à ces inconvénients, de manière simple, sûre, efficace et rationnelle.

Le problème que se propose de résoudre l'invention est de pouvoir regrouper différents boîtiers pour disques compacts notamment, de manière à créer un ensemble compact et unitaire.

Pour résoudre un tel problème, il a été conçu et mis au point un dispositif de groupage de plusieurs boîtiers, qui comprend des moyens aptes à assurer l'accouplement des boîtiers à partir de l'un de leur bord et à permettre leur articulation les uns par rapport aux autres en ayant la possibilité de les ouvrir pour accéder au disque.

Pour résoudre le problème posé d'assurer l'accouplement des boîtiers, les moyens sont constitués par une plaque présentant plusieurs bandes articulées correspondant chacune sensiblement à l'épaisseur d'un boîtier et apte à être fixée sur un côté résultant de la juxtaposition des boîtiers, la plaque présentant des agencements de clipage coopérant avec les boîtiers.

Dans une forme de réalisation, la plaque présente des agencements de clipage coopérant avec les boîtiers.

Dans une autre forme de réalisation, la plaque est collée sur le dos des différents boîtiers juxtaposés ou superposés en position jointive.

Par exemple, les agencements de clipage sont constitués par des ergots formés à chacune des extrémités de la bande articulée et coopérant avec des ouvertures formées chacune des extrémités du dos de chacun des boîtiers.

Pour résoudre le problème posé de permettre l'articulation des boîtiers les uns par rapport aux autres, les bandes résultent de lignes de prépliage formées dans l'épaisseur de la plaque, d'une manière parallèle entre elles.

Selon une autre forme de réalisation de l'invention, pour résoudre le problème posé d'assurer l'accouplement des boîtiers, pour permettre leur articulation les uns par rapport aux autres, les moyens sont constitués par des cavaliers aptes à assurer le clipage deux à deux des boîtiers, en coopérant avec un des volets de l'un des boîtiers et l'un des volets de l'autre boîtier qui lui est adjacent.

Avantageusement, les cavaliers ont une section transversale en U renversé et présentent à l'extrémité de leurs branches des agencements de clipage coopérant avec des agencements complémentaires que présentent les faces internes des volets correspondants.

A partir de cette conception de base des cavaliers, différentes solutions peuvent être envisagées.

Par exemple les cavaliers sont disposés perpendiculairement aux dos des boîtiers et à proximité de ces derniers pour permettre une ouverture à partir desdits dos, à la façon d'un livre.

Ou bien, les cavaliers sont disposés du côté des bords à partir desquels sont ouverts les boîtiers pour permettre une ouverture de l'ensemble des boîtiers à la façon d'un accordéon, lesdits cavaliers présentant au niveau de leur branche commune de liaison, des agencements d'articulation.

L'invention est exposée ci-après plus en détail à l'aide des figures des dessins annexés dans lesquels :
- la figure 1 est une vue en perspective de la plaque de liaison pour le groupage et l'accouplement, par exemple, de trois boîtiers;
- la figure 2 est une vue en perspective montrant le groupage des boîtiers en position de rangement ;
- la figure 3 est une vue en perspective montrant l'articulation des boîtiers les uns par rapport aux autres considérés du côté extérieur ;
- la figure 4 est une vue correspondant à la figure 3 considérée du côté intérieur ;

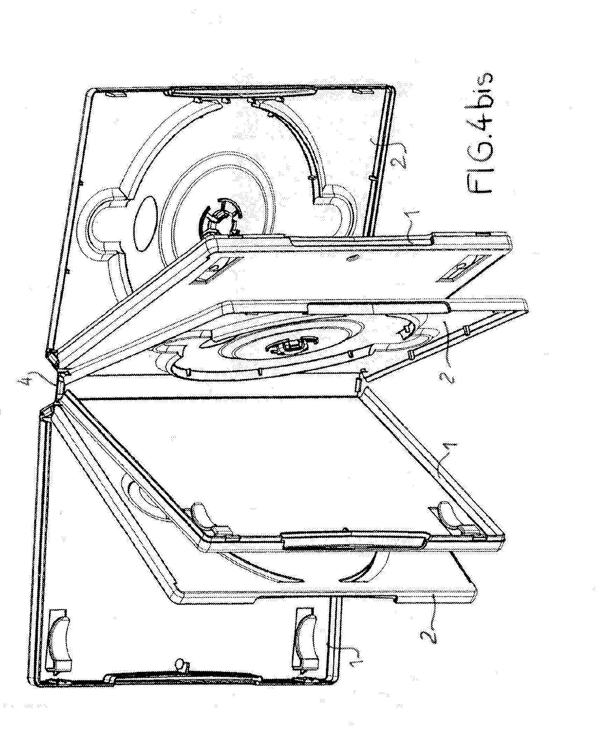

- la figure 4bis est une vue correspondant à la figure 4 en position ouverte des boîtiers ;

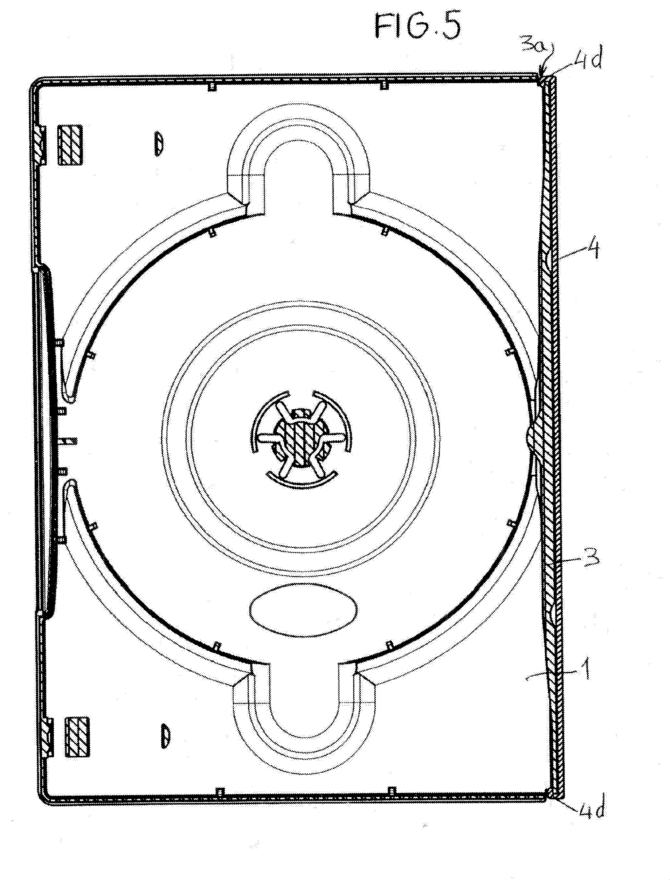

- la figure 5 est une vue en coupe longitudinale d'un boîtier montrant la mise en place de la plaque d' accouplement ;

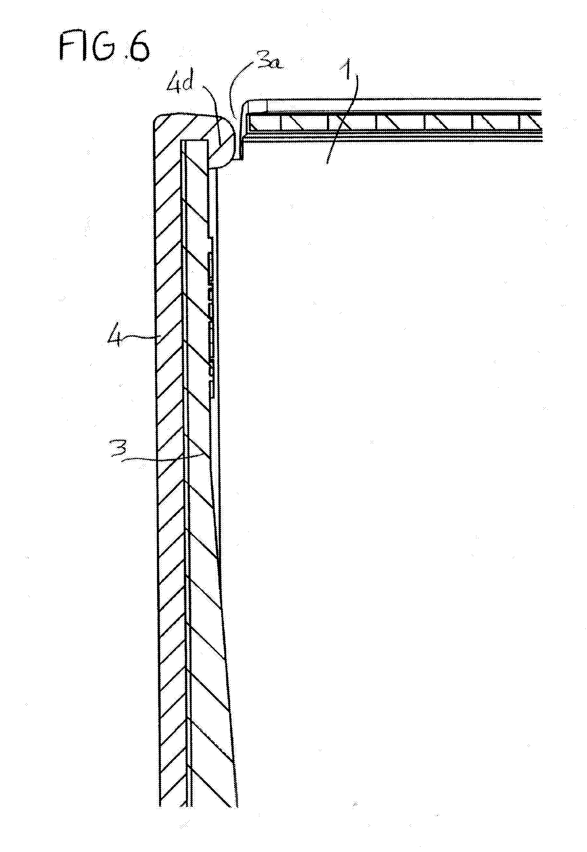

- la figure 6 est, à grande échelle, une vue partielle montrant l'accouplement de la plaque ;

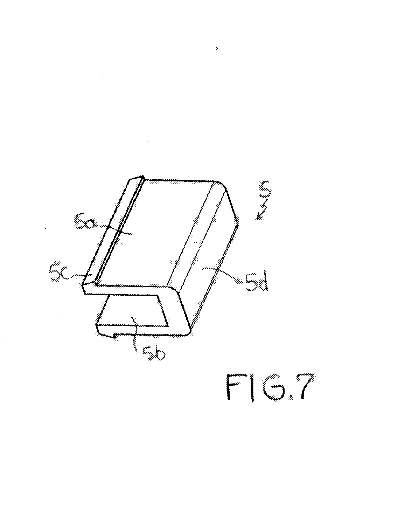

- la figure 7 est une vue en perspective d'une forme de réalisation d'un cavalier d'accouplement

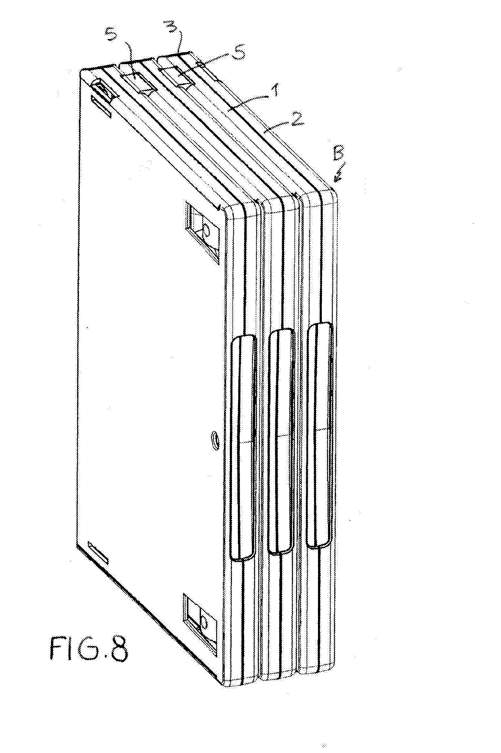

- la figure 8 montre un exemple d'utilisation des cavaliers d'accouplement pour le groupage de trois boîtiers, ces derniers étant présentés en position de rangement ;

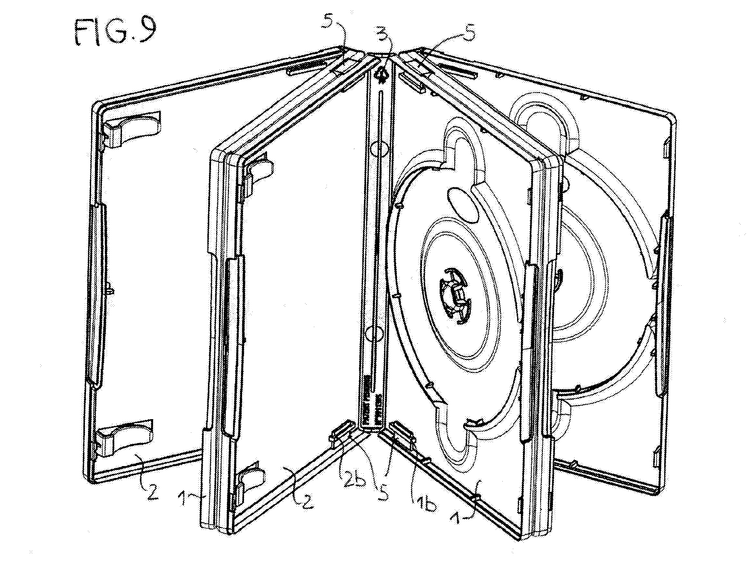

- la figure 9 est une vue correspondant à la figure 8 montrant l'ouverture des différents boîtiers, selon la figure précédente, pour accéder aux disques ;

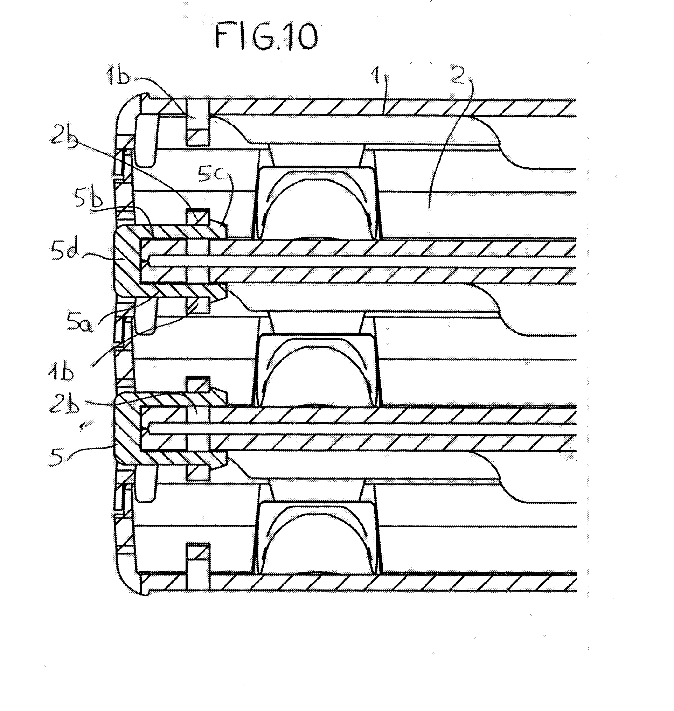

- la figure 10 est une vue partielle en coupe longitudinale montrant l'accouplement du boîtier au moyen du cavalier ;

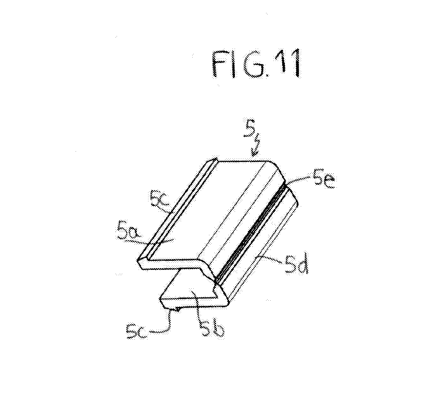

- la figure 11 est une vue en perspective d'une autre forme de réalisation du cavalier ;

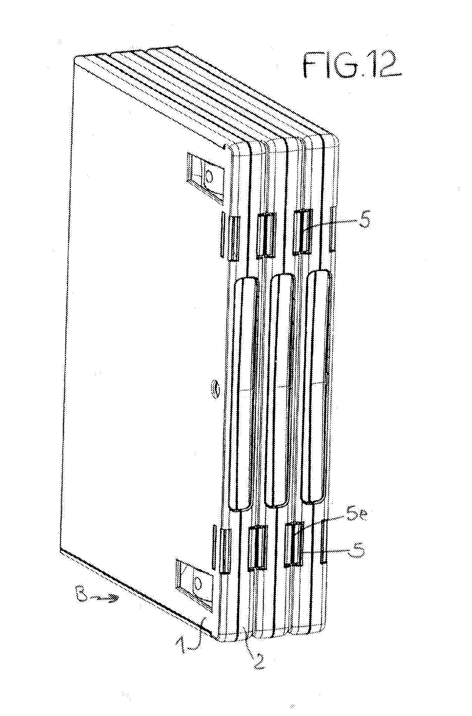

- la figure 12 montre un exemple d'utilisation du cavalier conforme aux réalisations illustrées à la figure 11, les boîtiers étant présentés en position de rangement ;

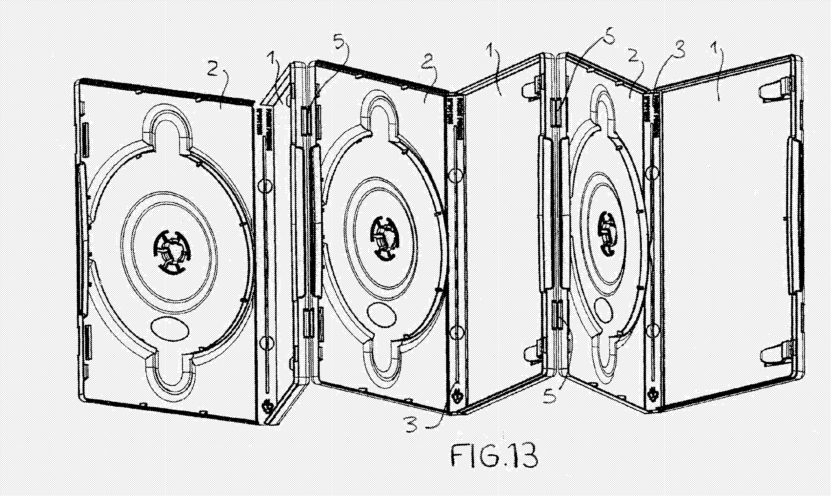

- la figure 13 est une vue correspondant à la figure 12 montrant le dépliement des boîtiers à la façon d'un accordéon pour avoir un accès aux disques;

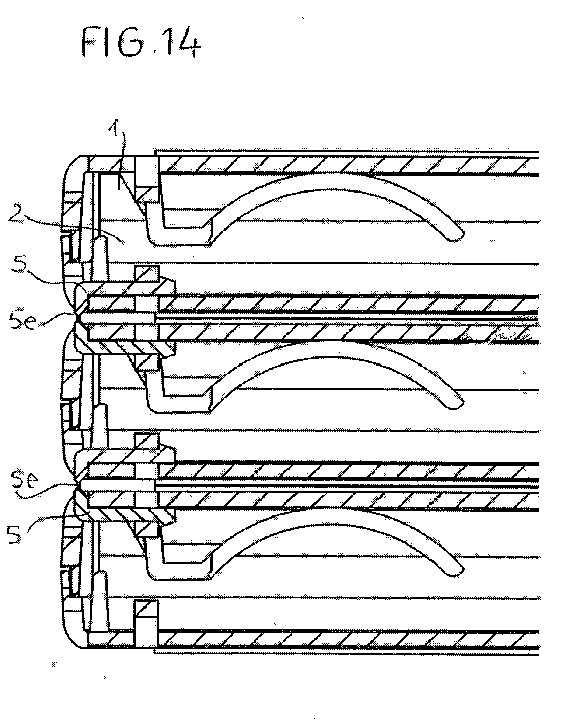

- la figure 14 est une vue en coupe longitudinale montrant l'accouplement des boîtiers.

D'une manière parfaitement connue pour un homme du métier, chaque boîtier, désigné dans son ensemble par (B), comprend deux volets (1) et (2) articulés à partir d'un dos commun (3). Généralement, chacun des volets (1) et (2) fait office de réceptacle, dont l'un au moins présente des agencements aptes à assurer le positionnement et le maintien d'un disque compact (C). A titre indicatif, nullement limitatif, les agencements de maintien et de positionnement peuvent être constitués par des ergots situés dans la partie centrale du volet correspondant et aptes à coopérer avec la partie centrale évidée du compact disque.

On n'exclut pas le fait que chacun des boîtiers puisse présenter intérieurement une plaque articulée agencée pour le positionnement et le maintien d'un disque. Autrement dit, l'invention s'applique pour le groupage de tout type de boîtiers (B) quelle que soit sa forme de réalisation.

D'une manière générale, le dispositif de groupage selon l'invention comprend des moyens conformés pour assurer l'accouplement de plusieurs boîtiers (3 dans les exemples illustrés) à partir de l'un de leur bord, tout en permettant leur articulation les uns par rapport aux autres, afin de pouvoir les ouvrir pour accéder aux disques.

A partir de cette conception de base, différentes formes de réalisation peuvent être envisagées.

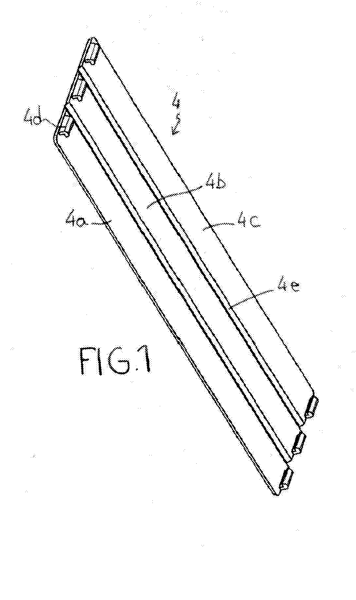

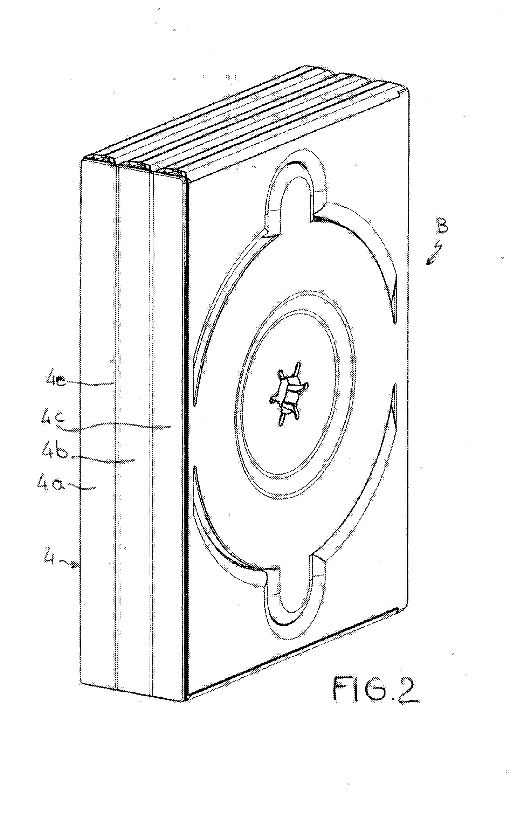

Aux figures 1 à 6, les moyens d'accouplement des boîtiers sont constitués par une plaque (4) constituée de plusieurs bandes articulées (4a, 4b, 4c) correspondant chacune très sensiblement à l'épaisseur d'un boîtier, autrement dit à la partie faisant office de dos (3). Cette plaque (4) est destinée à être fixée sur la partie du boîtier résultant de la juxtaposition des dos (3) de manière à faire office de charnière commune aux trois boîtiers, si l'on considère les exemples des figures des dessins annexés.

Comme le montre notamment la figure 1, la plaque (4) peut présenter des agencements de clipage coopérant avec les boîtiers. Par exemple, chacune des branches articulées (4a, 4b, 4c) présente, à chaque extrémité, des formes de clipage (4d) aptes à être engagées dans des ouvertures (3a) formées à chacune des extrémités des parties (3) du boîtier faisant office de dos (figure 6). Ou bien, dans une autre forme de réalisation, la plaque (4) peut être collée sur le dos (3) des différents boîtiers en position de juxtaposition ou de superposition.

Les bandes (4a, 4b, 4c) résultent de lignes de prépliage (4e) formées dans l'épaisseur de la plaque (4), de manière parallèle entre elles, et aux bords latéraux de ladite plaque.

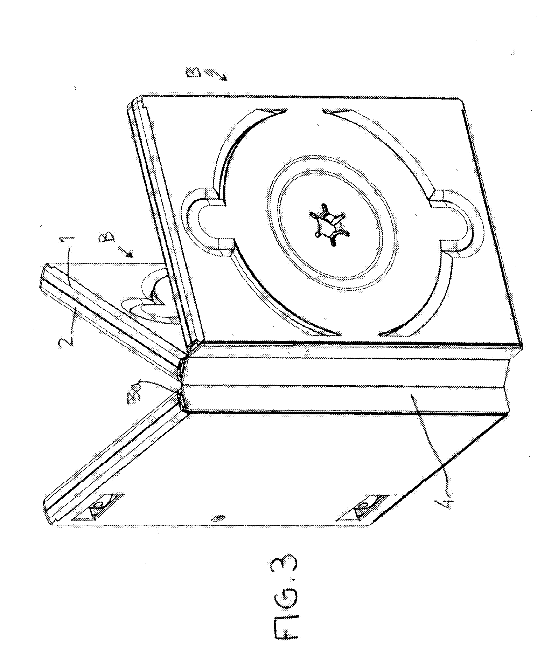

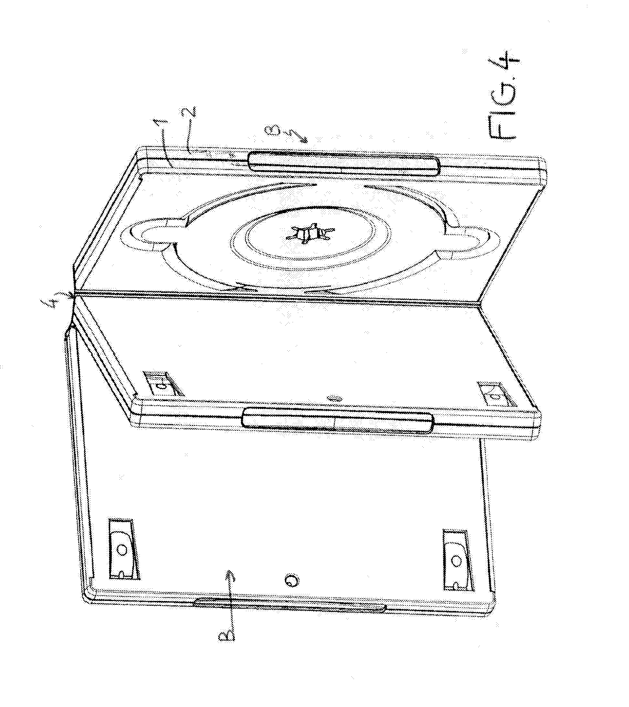

Compte tenu de ces dispositions, il apparaît donc que les boîtiers peuvent être accouplés les uns par rapport aux autres, à partir de la plaque commune de liaison (4) (figures 3 et 4), avec la possibilité d'ouvrir chacun des boîtiers pour accéder au disque (C).

Avantageusement, la plaque (4) est réalisée dans une matière plastique transparente.

Chacun des boîtiers peut être, préalablement à la mise en place de la plaque (4), équipé d'une jaquette, l'ensemble des trois boîtiers étant filmé après mise en place de la plaque commune d'articulation. Ou bien une seule jaquette peut enserrer, en combinaison avec le filmage, les trois boîtiers réunis par la plaque commune d'articulation.

Les figures 7 à 14 montrent une autre forme de réalisation du dispositif pour assurer le groupage de plusieurs boîtiers dans les conditions indiquées précédemment pour atteindre les mêmes objectifs.

Dans cette forme de réalisation, les moyens d'accouplement sont constitués par des cavaliers (5) aptes à assurer le clipage, deux à deux, des boîtiers en coopérant avec l'un des volets de l'un des boîtiers et l'un des volets de l'autre boîtier qui lui est adjacent. Les cavaliers ont une section transversale en U renversé et présentent, à l'extrémité de leurs branches (5a) et (5b), des agencements de clipage (5c) coopérant avec des agencements complémentaires (1b) ou (2b) que présente la face interne des volets correspondants (1) et (2) des boîtiers. Les branches (5a) et (5b) sont réunies par une branche commune (5d) (figures 7 et 11).

Dans la forme de réalisation des figures 7, 8, 9, 10, les cavaliers (5) sont disposés perpendiculairement au dos (3) des boîtiers et à proximité de ces derniers, pour permettre l'ouverture desdits boîtiers à partir de leur rebord libre (figures 8 et 9). Par exemple, les cavaliers (5) sont engagés dans des ouvertures à partir des rebords transversaux (1) et (2) des deux boîtiers adjacents.

Dans cette forme de réalisation, les boîtiers en tant que tels, regroupés par les cavaliers (5), ne sont pas articulés les uns par rapport aux autres. Seuls les volets des boîtiers du groupage obtenu, peuvent être ouverts pour accéder aux disques.

Dans une forme de réalisation illustrée aux figures 11, 12, 13, 14, les cavaliers (5) sont disposés du côté des rebords à partir desquels sont ouverts les boîtiers pour permettre une ouverture de l'ensemble des boîtiers à la façon d'un accordéon. Dans ce cas, les cavaliers (5) présentent, au niveau de leur branche commune (5d), des agencements d'articulation (5e) constitués par exemple par une ligne de prépliage formée dans l'épaisseur de ladite branche commune (5d). Les cavaliers sont engagés dans des ouvertures formées à proximité de l'extrémité de chacun des rebords longitudinaux opposés aux dos (3) que présentent les volets (1) et (2) des boîtiers adjacents (figures 12, 13 et 14).

Comme précédemment, les différents boîtiers, destinés à être regroupés, reçoivent séparément, ou après groupage, une jaquette et sont filmés ensemble.

Les avantages ressortent bien de la description., en particulier on souligne et on rappelle la possibilité de grouper et de solidariser des boîtiers standards ou non, quelle que soit leur épaisseur, lesdits boîtiers pouvant être simples ou doubles, et présenter tout type d'agencement pour le maintien et le positionnement des disques compacts audio ou vidéo.

On note également la possibilité de réaliser un emballage complet des boîtiers (pose de la jaquette, mise en place du disque et des livrets) sur des machines automatiques du type de celles parfaitement connues pour un homme du métier. Il en résulte un coût d'emballage minimum, les différents boîtiers pouvant être regroupés et assemblés qu'en phase finale.

## Revendications

1. Dispositif de groupage de plusieurs boîtiers de compact disque, constitués de deux volets (1) et (2) articulés à partir d'un dos (3), **caractérisé en ce qu'**il comprend des moyens (4) ou (5) aptes à assurer l'accouplement des boîtiers à partir de l'un de leur bord et à permettre leur articulation les uns par rapport aux autres en ayant la possibilité de les ouvrir pour accéder au disque, lesdits moyens étant constitués par une plaque (4) présentant plusieurs bandes articulées (4a, 4b, 4c) correspondant chacune sensiblement à l'épaisseur d'un boîtier et apte être fixée sur un côté résultant de la juxtaposition des boîtiers.

2. Dispositif selon la revendication 1, **caractérisé en ce que** la plaque (4) présente des agencements de clipage (4d) coopérant avec les boîtiers.

3. Dispositif selon la revendication 1, **caractérisé en ce que** la plaque (4) est collée sur le dos des différents boîtiers en position de juxtaposition ou de superposition.

4. Dispositif selon la revendication 2, **caractérisé en ce que** les agencements de clipage sont constitués par des ergots formés à chacune des extrémités de la bande articulée (4) et coopérant avec des ouvertures formées à chacune des extrémités du dos (3) de chacun des boîtiers.

5. Dispositif selon la revendication 1, **caractérisé en ce que** les bandes résultent de lignes de prépliage formées dans l'épaisseur de la plaque (4), d'une manière parallèle entre elles et aux bords latéraux de la bande.

6. Dispositif de groupage de plusieurs boîtiers de compact disque, constitués de deux volets (1) et (2) articulés à partir d'un dos (3), **caractérisé en ce qu'**il comprend des moyens (4) ou (5) aptes à assurer l'accouplement des boîtiers à partir de l'un de leur bord et à permettre leur articulation les uns par rapport aux autres en ayant la possibilité de les ouvrir pour accéder au disque, lesdits moyens étant constitués par des cavaliers (5) aptes à assurer le clipage, deux à deux, des boîtiers en coopérant avec un des volets de l'un des boîtiers et l'un des volets de l'autre boîtier qui lui est adjacent.

7. Dispositif selon la revendication 6, **caractérisé en ce que** les cavaliers (5) ont une section transversale en U renversé et présentent à l'extrémité de leurs branches des agencements de clipaga coopérant avec des agencements complémentaires que présentent les faces internes des volets correspondants (1) et (2).

8. Dispositif selon la revendication 7, **caractérisé en ce que** les cavaliers (5) sont disposés perpendiculairement aux dos des boîtiers et à proximité de ces derniers pour permettre une ouverture à partir desdits dos, à la façon d'un livre.

9. Dispositif selon la revendication 7, **caractérisé en ce que** les cavaliers (5) sont disposés du côté des bords à partir desquels sont ouverts les boîtiers pour permettre une ouverture de l'ensemble des boîtiers à la façon d'un accordéon, lesdits cavaliers (5) présentant au niveau de leur branche commune de liaison, des agencements d'articulation.
